# EUROPÄISCHE PATENTSCHRIFT

(11) **EP 2 732 307 B1**
(45) Veröffentlichungstag und Bekanntmachung des Hinweises auf die Patenterteilung: **11.01.2017**
(21) Anmeldenummer: 12724109.9
(22) Anmeldetag: 16.05.2012
(51) Int. Cl.: G01S 7/02, G01S 13/93

(54) **WINKELAUFLÖSENDER RADARSENSOR FÜR KRAFTFAHRZEUGE**
ANGULAR RESOLVING RADAR SENSOR FOR MOTOR VEHICLES
CAPTEUR RADAR À RÉSOLUTION ANGULAIRE POUR VÉHICULES À MOTEUR

(30) Priorität: 12.07.2011 DE 102011079007
(43) Veröffentlichungstag der Anmeldung: 21.05.2014
(73) Patentinhaber: Robert Bosch GmbH, 70442 Stuttgart (DE)
(72) Erfinder: BINZER, Thomas, 74379 Ingersheim (DE); WALDSCHMIDT, Christian, 71272 Renningen (DE); GROSS, Volker, 71254 Ditzingen (DE); HELLINGER, Raphael, 75181 Pforzheim (DE); KUEHNLE, Goetz, 71282 Hemmingen (DE); TREPTOW, Andre, 71665 Vaihingen An Der Enz (DE)
(86) Internationale Anmeldenummer: PCT/EP2012/059190
(87) Internationale Veröffentlichungsnummer: WO 2013/007431

(56) Entgegenhaltungen:
- DE-A1- 10 036 131
- US-A- 3 364 490
- US-A- 4 023 172
- US-B1- 6 674 394

## Beschreibung

### STAND DER TECHNIK

Die Erfindung betrifft einen winkelauflösenden Radarsensor für Kraftfahrzeuge, mit mehreren Antennenelementen, mehreren Empfangskanälen und einer vor den Antennenelementen (12) angeordneten Radarlinse.

Kraftfahrzeuge werden zunehmend mit sogenannten ACC-Systemen (Adaptive Cruise Control) ausgerüstet, die es gestatten, den Abstand des eigenen Fahrzeugs zu einem vorausfahrenden Fahrzeug automatisch zu regeln. Zu diesem Zweck werden mit Hilfe des Radarsensors, beispielsweise eines FMCW-LRR-Sensors (Frequency Modulated Continuous Wave Long Range Radar) die Abstände und Azimutwinkel sowie die Relativgeschwindigkeiten vorausfahrender Fahrzeuge gemessen. Diese Radarsensoren arbeiten typischerweise mit einer Frequenz von 24 GHz oder 77 GHz.

Für weitreichende Radarsensoren für Kraftfahrzeuge (Long Range Radar, LRR) werden beispielsweise Linsenantennen verwendet. Diese umfassen eine Radarlinse und mehrere Antennenelemente, die als Primärstrahler bezeichnet werden. Die Primärstrahler werden beispielsweise als Patchantennen ausgeführt. Um einen Winkelversatz der Hauptempfindlichkeitsrichtungen der Patchantennen zu erreichen, werden die Primärstrahler in einer Reihe quer zur optischen Achse des Radarsensors angeordnet. Wenn, wie es häufig der Fall ist, zum Senden des Radarsignals und zum Empfang des Radarechos dieselben Antennenelemente eingesetzt werden, weisen auch die Hauptabstrahlrichtungen der Antennenelemente entsprechende Abweichungen auf. Je größer der Abstand eines Primärstrahlers von der optischen Achse der Radarlinse ist, desto stärker weicht die Hauptstrahlrichtung des betreffenden Antennenelements von der optischen Achse ab. Diese Abweichung wird auch als Schielen bezeichnet. Bei der Auslegung der Breiten der Empfindlichkeitsbereiche der Antennenelemente muss ein Kompromiss zwischen einem breiten Sichtbereich und einer guten Winkelauflösung eingegangen werden.

Die bisher in diesem Zusammenhang eingesetzten Radarsensoren weisen beispielsweise vier Antennenelemente oder Antennenpatches auf. Jedem Antennenelement ist genau ein Kanal einer Auswerteeinrichtung des Radarsensors zugeordnet. Die Antennenelemente haben jeweils eine Richtcharakteristik mit einer Hauptkeule, d.h. einen begrenzten Bereich hoher Empfindlichkeit, der ein Empfindlichkeitsmaximum umfasst. Die Hauptkeulen der Antennenelemente decken zusammen einen gewissen Winkelbereich ab. Da die Empfindlichkeitsbereiche einander überlappen, enthält man von einem einzelnen Radarobjekt Radarechos in mehreren Antennenelementen und somit in mehreren Kanälen. Für ein idealisiertes, annährend punktförmiges Radarobjekt bei einem gegebenen Richtungswinkel besteht zwischen den in den verschiedenen Kanälen empfangenen Signalen eine charakteristische Phasen- und Amplitudenbeziehung. Durch die Laufzeitunterschiede der Radarechos vom Radarobjekt zu den verschiedenen Antennenelementen ergibt sich eine Phasendifferenz, die annähernd proportional zum Richtungswinkel bezüglich einer optischen Achse des Radarsensors und proportional zum Abstand der Antennenelemente in der Richtung rechtwinklig zur optischen Achse sowie umgekehrt proportional zur Wellenlänge der Radarwellen ist. Die Amplitudenverhältnisse zwischen den empfangenen Signalen sind vom Richtungswinkel und von den Empfindlichkeitskurven der Antennenelemente abhängig. Durch Auswertung der Phasenbeziehungen und/oder Auswertung der Amplitudenbeziehungen ist es möglich, den Richtungswinkel eines georteten Radarobjektes zu bestimmen.

In den Kanälen des Radarsensors wird das von einem zugeordneten Antennenelement empfangene Signal ausgewertet. Beispielsweise wird bei einem FMCW-Radar, bei dem die Frequenz des gesendeten Radarsignals periodisch moduliert wird, für jedes Antennenelement das empfangene Signal mit dem zum Empfangszeitpunkt gesendeten Signal, unter Erhaltung der Phasen- und Amplitudenbeziehungen, gemischt, so dass man ein Zwischenfrequenzsignal erhält, dessen Frequenz dem Frequenzunterschied zwischen dem gesendeten und dem empfangenen Signal entspricht. Die Zwischenfrequenzsignale lassen sich in einer Auswertungselektronik auswerten. Beispielsweise können sie mit Analog-Digital-Umsetzern digitalisiert und dann digital weiterverarbeitet werden. Beispielsweise wird in jedem Kanal der Auswerteeinrichtung in jeder Messperiode ein Frequenzspektrum des Zwischenfrequenzsignals aufgezeichnet. In diesem Frequenzspektrum zeichnet jedes geortete Objekt sich durch einen Peak ab, dessen Frequenzlage vom Abstand und der Relativgeschwindigkeit des betreffenden Objekts abhängig ist. Durch Modulation der gesendeten Frequenz mit unterschiedlichen Rampensteigungen lassen sich aus den erhalten Frequenzlagen der Abstand und die Relativgeschwindigkeit berechen.

Die Abhängigkeit der Amplitude und der Phase des auf einem Antennenelement empfangenen Signals von dem Azimutwinkel des georteten Objektes lässt sich für ein Standardobjekt in einem gegebenen Abstand und mit einer gegebenen Reflektionsstärke in einem Antennendiagramm darstellen. Durch Abgleich der von den verschiedenen Antennenelementen für dasselbe Objekt erhaltenen Amplituden und/oder Phasen mit den entsprechenden Antennendiagrammen lässt sich in einer zweiten Auswertungsstufe der Azimutwinkel des betreffenden Objekts bestimmen.

DE 100 36 131 A1 beschreibt einen Radarsensor mit einem Array von Patchantennen in Form einer Kombination eines gefüllten Sub-Arrays von Patchantennen und eines ausgedehnten Sub-Arrays von Patchantennen. Das ausgedünnte Sub-Array hat eine Aperturabmessung mit periodischen Grating-Lobes. Die Ausgangssignale der Patchantennen werden nach dem Prinzip des Digital Beam Forming nach Amplitude und Phase bewertet und für die jeweiligen Sub-Arrays summiert.

US 4 023 172 A beschreibt ein Monopuls-Radarempfangssystem, bei dem zwei Hornstrahler als Hauptantennensystem und zwei Hornstrahler als Hilfsantennensystem auf einer Linie ausgerichtet sind und in gleichmäßigem Abstand und symmetrisch zur Peilachse angeordnet sind.

US 3 364 490 A beschreibt eine Monopuls-Antenne mit variabler Strahlbreite, die Positionseinstellmittel aufweist, um einen Fokussierungseffekt eines Reflektors zu verändern. Das Monopulssystem leitet Information über den Azimut und die Elevation eines Zielflugzeuges ab aus Amplituden- und Phasenbeziehungen zwischen unterschiedlichen Teilen eines Radarsignals in Leitungen für ein Summensignal, ein Elevationsdifferenzsignal und ein Azimutdifferenzssignal.

US 6 674 394 B1 beschreibt ein Verfahren zum Bestimmen einer Objektposition basierend auf Sensordaten eines seitwärts blickenden Radarsensors, der eine Linse, eine Antenne und einen Sender/Empfänger umfasst. Einen ähnlichen vorwärtsblickenden Radarsensor beschreibt DE10 2007 038 513 A1.

### OFFENBARUNG DER ERFINDUNG

Aufgabe der Erfindung ist es, einen Radarsensor mit verbessertem Winkeldetektionsvermögen zu schaffen und dabei den erforderlichen Schaltungsaufwand in Grenzen zu halten.

Diese Aufgabe wird erfindungsgemäß dadurch gelöst, dass wenigstens zwei mit demselben Empfangskanal verbundene Antennenelemente zusammen eine Richtcharakteristik mit wenigstens zwei Hauptkeulen mit unterschiedlichen Hauptempfindlichkeitsrichtungen aufweisen, wobei die mit diesem Empfangskanal verbundenen Antennenelemente bezüglich einer optischen Achse der Radarlinse asymmetrisch angeordnet sind.

So können beispielsweise sechs Antennenelemente und vier Empfangskanäle vorgesehen sein, wobei zwei Antennenelemente mit einem gemeinsamen Empfangskanal verbunden sind, zwei weitere Antennenelemente mit jeweils einem eigenen weiteren Empfangskanal verbunden sind, und die verbleibenden zwei Antennenelemente wiederum mit einem gemeinsamen weiteren Empfangskanal verbunden sind. Die mit jeweils einem einzelnen Empfangskanal verbundenen Antennenelemente decken beispielsweise mittlere Winkelbereiche ab, während zwei mit einem gemeinsamen Kanal verbundene Antennenelemente jeweils ein Hauptempfindlichkeitsrichtung links und rechts des mittleren Bereichs haben. Auf diese Weise können Sie sowohl zur Erfassung eines Objektes in einem linken Bereich als auch in einem rechten Bereich eingesetzt werden. Es kann somit bei gleicher Anzahl der Empfangskanäle ein breiterer Sichtbereich abgedeckt werden, ohne dass die Winkelauflösung verringert wird.

Es können beispielsweise wenigstens zwei Antennenelemente, die jeweils eine Richtcharakteristik mit einer Hauptkeule mit einer Hauptempfindlichkeitsrichtung aufweisen, mit demselben Empfangskanal verbunden sein, so dass sie die genannte Richtcharakteristik mit wenigstens zwei Hauptkeulen mit unterschiedlichen Hauptempfindlichkeitsrichtungen aufweisen.

Bei der Richtcharakteristik handelt es sich insbesondere um die Empfangs-Richtcharakteristik der jeweiligen Antennenelemente. Diese entspricht grundsätzlich hinsichtlich der räumlichen Parameter der Sende-Richtcharakteristik, wenn ein Antennenelement zum Senden und Empfangen verwendet wird.

Bei den Empfangskanälen kann es sich insbesondere um Kanäle einer Auswerteeinrichtung des Radarsensors handeln, die jeweils dazu eingerichtet sind, Signale der entsprechenden Antennenelemente zu verarbeiten.

Vorzugsweise handelt es sich bei den wenigstens zwei Hauptkeulen der Richtcharakteristik der mit demselben Empfangskanal verbundenen Antennenelemente um getrennte, d.h. nicht miteinander überlappende Hauptkeulen. Dadurch kann besser unterschieden werden, aus welcher Hauptkeule ein empfangenes Radarsignal stammt.

Vorteilhafte Ausgestaltungen und Weiterbildungen der Erfindung sind in den Unteransprüchen angegeben.

Vorzugsweise weist wenigstens ein weiteres, mit einem weiteren Kanal verbundenes Antennenelement eine Richtcharakteristik mit wenigstens einer Hauptkeule mit einer Hauptempfindlichkeitsrichtung auf, die zwischen zwei Hauptempfindlichkeitsrichtungen der genannten wenigstens zwei Hauptkeulen liegt. Dadurch kann zusätzliche Information zur Winkeldetektion eines Radarobjektes gewonnen werden. Vorzugsweise überlappt die genannte wenigstens eine Hauptkeule mit wenigstens einer der genannten wenigstens zwei Hauptkeulen.

In einer bevorzugten Ausführungsform weist der Radarsensor eine vor den Antennenelementen angeordneten Radarlinse, insbesondere eine Sammellinse, auf. Unterschiedliche Hauptempfindlichkeitsrichtungen der Antennenelemente können dann einfach durch einen unterschiedlichen seitlichen Versatz der Antennenelemente bezüglich einer optischen Achse der Radarlinse erreicht werden. Die Reihenfolge, in der die Hauptempfindlichkeitsrichtungen der einzelnen Hauptkeulen in azimutaler Richtung aufeinander folgen, kann dann der Reihenfolge der in einer Reihe angeordneten Antennenelemente entsprechen.

So können beispielsweise die Antennenelemente in einer Reihe angeordnet sein, wobei zwischen den wenigstens zwei mit demselben Empfangskanal verbundenen Antennenelementen wenigstens ein weiteres, mit einem weiteren Empfangskanal verbundenes Antennenelement angeordnet ist. Dieses weitere Antennenelement hat dann eine Hauptempfangsrichtung, die zwischen zwei Hauptempfangsrichtungen der erstgenannten wenigstens zwei Antennenelementen liegt.

Bei den Antennenelementen kann es sich beispielsweise um Patchantennen handeln.

Unter "Antennenelemente" im Sinne dieser Anmeldung sollen jedoch auch Antennenspalten verstanden werden, mit denen beispielsweise eine Strahlformung in Elevationsrichtung erfolgen kann. Solche Antennenspalten verlaufen, wenn der Radarsensor im Fahrzeug eingebaut ist, vertikal. Die Antennenspalten sind dann in der Horizontalen nebeneinander angeordnet. Die Phasenbeziehung und Leistungsaufteilung zwischen den verschiedenen Subelementen (Patches) innerhalb einer Antennenspalte bestimmen die Richtcharakteristik in der Elevation.

Vorzugsweise sind die Antennenelemente Sende- und Empfangs-Antennenelemente.

Vorzugsweise sind die Antennenelemente außerhalb einer Fokusebene (Bildebene) der Radarlinse angeordnet. Durch eine Anordnung beispielsweise in etwas geringerem oder etwas größerem Abstand zur Radarlinse entstehen je nach seitlichem Abstand von einer optischen Achse der Radarlinse unterschiedlich stark ausgeprägte Phasenabweichungen der Radarsignale für die einzelnen Antennenelemente. Wenn beispielsweise mit demselben Empfangskanal verbundene Antennenelemente links und rechts der optischen Achse mit unterschiedlichen Abständen von der optischen Achse angeordnet sind, können sich für Positionen eines Radarobjektes im gleichen Winkelabstand links oder rechts von der optischen Achse unterschiedliche Phasenbeziehungen zwischen den empfangen Signalen der Empfangskanäle ergeben.

Vorzugsweise weist der Radarsensor eine Auswerteeinrichtung auf, die dazu eingerichtet ist, eine Winkelposition eines erfassten Radarobjektes zu bestimmen auf der Basis von Amplituden und Phasen empfangener Radarsignale der Antennenelemente.

Vorzugsweise ist die Auswerteeinrichtung dazu eingerichtet, zwischen jeweiligen Hauptkeulen zugeordneten Winkelpositionen eines durch die genannten wenigstens zwei Hauptkeulen erfassten Radarobjektes zu unterscheiden auf der Basis von Amplituden und Phasen empfangener Radarsignale der mit demselben Empfangskanal verbundenen Antennenelemente und von Amplituden und Phasen empfangener Radarsignale eines oder mehrerer weiterer, mit einem oder mehreren weiteren Empfangskanäle verbundenen Antennenelemente. Beispielsweise können die Antennenelemente dazu eingerichtet sein, dass in den Richtcharakteristiken der Antennenelemente Winkelpositionen, die unterschiedlichen Hauptkeulen der mit demselben Empfangskanal verbundenen Antennenelemente zugehören, anhand von zugehörigen Amplituden und Phasen und den Winkelpositionen zugehörigen Amplituden und Phasen eines oder mehrerer weiterer Empfangskanäle unterscheidbar sind, so dass die Auswerteeinrichtung dazu in der Lage ist, zwischen jeweiligen Hauptkeulen zugeordneten Winkelpositionen eines durch die genannten wenigstens zwei Hauptkeulen erfassten Radarobjektes zu unterscheiden.

In einer bevorzugten Ausführungsform ist die Auswerteeinrichtung dazu eingerichtet, beim Bestimmen der Winkelposition eine Phasendifferenz zwischen empfangenen Radarsignalen von Empfangskanälen zu berücksichtigen, die mit Antennenelementen verbunden sind, welche Richtcharakteristiken mit einander überlappenden Hauptkeulen aufweisen. Durch Bildung der Phasendifferenz kann besonders gut Phaseninformation aus überlappenden Hauptkeulen genutzt werden.

Vorzugsweise sind wenigstens zwei Hauptempfindlichkeitsrichtungen von mit einem ersten Empfangskanal verbundenen Antennenelementen mit wenigstens zwei Hauptempfindlichkeitsrichtungen von mit einem weiteren Kanal verbundenen Antennenelementen verschachtelt. Bei in azimutaler Richtung verschachtelten Hauptempfindlichkeitsrichtungen sind diese somit, jeweils von innen nach außen, links in anderer Reihenfolge als rechts angeordnet. Beispielsweise kann die Auswerteeinrichtung dazu eingerichtet sein, zwischen Winkelpositionen eines durch zwei Hauptkeulen von mit dem ersten Empfangskanal verbundenen Antennenelementen erfassten Radarobjektes zu unterscheiden auf der Basis einer Phasendifferenz zwischen empfangenen Radarsignalen des ersten Empfangskanals und des genannten weiteren Empfangskanals.

### KURZE BESCHREIBUNG DER ZEICHNUNGEN

Im folgenden werden bevorzugte Ausführungsbeispiels anhand der Zeichnung näher erläutert.

Es zeigen:
- Fig. 1: ein Blockdiagramm des erfindungsgemäßen Radarsensors;
- Fig. 2: eine Darstellung eines Antennendiagramms;
- Fig. 3: Ausschnitte aus einem Diagramm, das die Winkelabhängigkeit der Phase der Richtcharakteristik zweier Kanäle zeigt;
- Fig. 4: Ausschnitte aus einem Diagramm, das die Winkelabhängigkeit der Phasendifferenz der Richtcharakteristik der Kanäle zeigt; und
- Fig. 5: eine Skizze eines weiteren Beispiels eines Antennensystems des Radarsensors.

### AUSFÜHRUNGSFORMEN DER ERFINDUNG

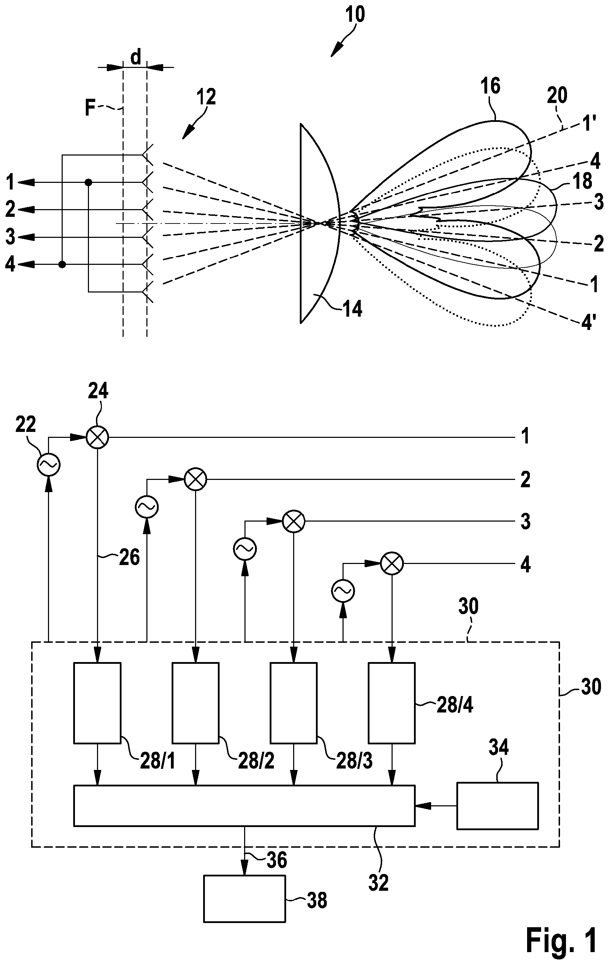

Der in Fig. 1 gezeigte Radarsensor weist ein Antennensystem 10 mit sechs Antennenelementen 12, die auch als Primärstrahler bezeichnet werden, und einer in Abstand vor den Antennenelementen 12 angeordneten Radarlinse 14 in Form einer Sammellinse. Die Antennenelemente 12 sind nebeneinander in einer Reihe in horizontaler Richtung angeordnet. Dabei sind die Antennenelemente 12 geringfügig gegenüber der Fokusebene F (Bildebene) der Radarlinse 14 versetzt angeordnet. Beispielsweise weist die Radarlinse 14 eine Brennweite von 28 mm auf, und die Antennenelemente 12 sind in einem Abstand d von 3 bis 4 mm vor der Fokusebene F angeordnet. Die optische Achse der Radarlinse 14 ist strichpunktiert gezeichnet. Sie schneidet sich, in der dargestellten Schnittebene, im Brennpunkt mit der Fokusebene F.

Die beiden äußeren linken Antennenelemente und die beiden äußeren rechten Antennenelemente sind paarweise mit gemeinsamen Speiseleitungen 1 und 4 verbunden, und die mittleren Antennenelemente sind jeweils mit separaten Speiseleitungen 2 und 3 verbunden. Von links nach rechts sind die Antennenelemente 12 mit den Speiseleitungen 4, 1, 2, 3, 4, 1 verbunden. Die von den Antennenelementen 12 erzeugten Radarstrahlen oder "Beams" sind entsprechend den zugeordneten Speiseleitungen 1 bis 4 mit 1 bis 4 sowie 1' und 4' gekennzeichnet und durch die entsprechenden Hauptkeulen 16, 18 und die Hauptempfindlichkeitsrichtungen 20 (gestrichelte Linien) repräsentiert.

Über jede der Speiseleitungen1 bis 4 wird in den entsprechenden Antennenelementen 12 von einem lokalen Oszillator 22 über einen Mischer 24 ein Radarsignal zugeführt, das von den betreffenden Antennenelementen gesendet wird. Das von den jeweiligen Antennenelementen empfangene Signal eines Radarechos wird im Mischer 24 mit dem gesendeten Signal gemischt, so dass man ein Zwischenfrequenzsignal 26 erhält, das einem jeweiligen Empfangskanal 28 einer Auswerteeinrichtung 30 des Radarsensors zugeführt wird. Die von den vier Speiseleitungen 1 bis 4 stammenden Signale werden jeweils in einem getrennten Empfangskanal 28 vorverarbeitet. Die Empfangskanäle 28/1 bis 28/4 werden im folgenden als Kanäle 1 bis 4 bezeichnet.

Die mit dem Kanal 1 verbundenen Antennenelemente 12 bilden zwei Hauptkeulen 16 mit unterschiedlichen Hauptempfindlichkeitsrichtungen 20 aus, die in Fig. 1 als 1 und 1' gekennzeichnet sind. Die mit dem Kanal 4 verbundenen Antennenelemente 12 bilden ebenfalls zwei Hauptkeulen 16 mit unterschiedlichen Hauptempfindlichkeitsrichtungen 20 aus, die als 4 und 4' gekennzeichnet sind. Dabei sind die Hauptempfindlichkeitsrichtungen der Radarstrahlen 1' und 1 mit den Hauptempfindlichkeitsrichtungen der Radarstrahlen 4 und 4' verschachtelt. Während die äußere linke Hauptkeule 16 dem Kanal 1 zugeordnet ist, ist die äußere rechte Hauptkeule 16 dem Kanal 4 zugeordnet. Die Anzahl der einem Kanal zugeordneten Hauptkeulen 16 entspricht der Anzahl der mit dem Kanal verbundenen Antennenelemente 12, aus deren Richtcharakteristiken sie sich durch Überlagerung ergeben.

Zwischen den jeweiligen Hauptkeulen 16 der Kanäle 1 und 4 liegen die Hauptkeulen 18 der Kanäle 2 und 3. Dabei ist den Kanälen 2 und 3 jeweils nur eine Hauptkeule 18 zugeordnet, da sie jeweils nur mit einem Antennenelement 12 verbunden sind.

Zwischen den Hauptempfindlichkeitsrichtungen 20 der dem Kanal 1 zugeordneten Hauptkeulen 16 liegen die Hauptempfindlichkeitsrichtungen der Hauptkeulen 18 der Kanäle 2 und 3 sowie einer der Hauptkeulen 16 des Kanals 4.

In Fig. 1 sind die Hauptkeulen 16 der dem Kanal 1 zugeordneten Beams mit einer dicken Linie hervorgehoben, während die dem Kanal 4 zugeordneten Hauptkeulen 16 mit punktierten Linien hervorgehoben sind. Die jeweiligen Hauptkeulen 16 eines Kanals sind voneinander durch lokale Minima getrennt. Es können beispielsweise Nebenkeulen zwischen den Hauptkeulen 16 vorhanden sein.

Entsprechend dem Funktionsprinzip eines FMCM-Radars sind die Frequenzen der von den Oszillatoren 22 erzeugten Radarsignale rampenförmig moduliert, wobei jeder Zyklus mindestens eine steigende Rampe und eine fallende Rampe enthält. Bei der Vorverarbeitung in den Empfangskanälen 28 werden die auf jeder Rampe erhaltenen Zwischenfrequenzsignale aufgezeichnet und durch diskrete Fourier-Transformation in ein Frequenzspektrum umgewandelt. In diesem Spektrum werden dann die den georteten Objekten entsprechenden Peaks identifiziert. Anhand der Frequenzlagen der für jedes Objekt auf der steigenden und der fallenden Rampe erhaltenen Peaks lassen sich dann in bekannter Weise der Abstand und die Relativgeschwindigkeit des betreffenden Objekts berechnen. Außerdem werden die Peaks bei der Vorverarbeitung in den Empfangskanälen 28 so normiert, dass ihre Amplituden miteinander verglichen werden können. Ebenso werden die zu den Peaks gehörenden Phasen bestimmt.

In einem Modul 32 der Auswerteeinrichtung 30 werden dann die normierten Amplituden und Phasen der Peaks der Zwischenfrequenzsignale mit entsprechenden Antennendiagrammen für die Antennenelemente 12 abgeglichen, so dass sich anhand der bekannten Winkelabhängigkeit der Amplituden und Phasen die Azimutwinkel der georteten Objekte bestimmen lassen. Beispielsweise werden jeweils Phasendifferenzen für die Kanäle 1-2, 2-3, 3-4 und 4-1 gebildet, und die Phasendifferenzen sowie die Amplituden werden mit entsprechenden Antennendiagrammen korreliert, um anhand des Grades der Übereinstimmung die Azimutwinkel der georteten Objekte zu schätzen. Hierzu wird beispielsweise ein Winkelspektrum bestimmt, welches in Abhängigkeit des Winkels eine Korrelation mit den Werten der Amplitude und Phase angibt. Ein Peak des Winkelspektrums kennzeichnet dann den wahrscheinlichsten Wert des Azimutwinkels. Kennlinien der Antennendiagramme, insbesondere der Amplituden und der Phasendifferenz, sind in einem Speicher 34 der Auswerteeinrichtung 30 abgelegt.

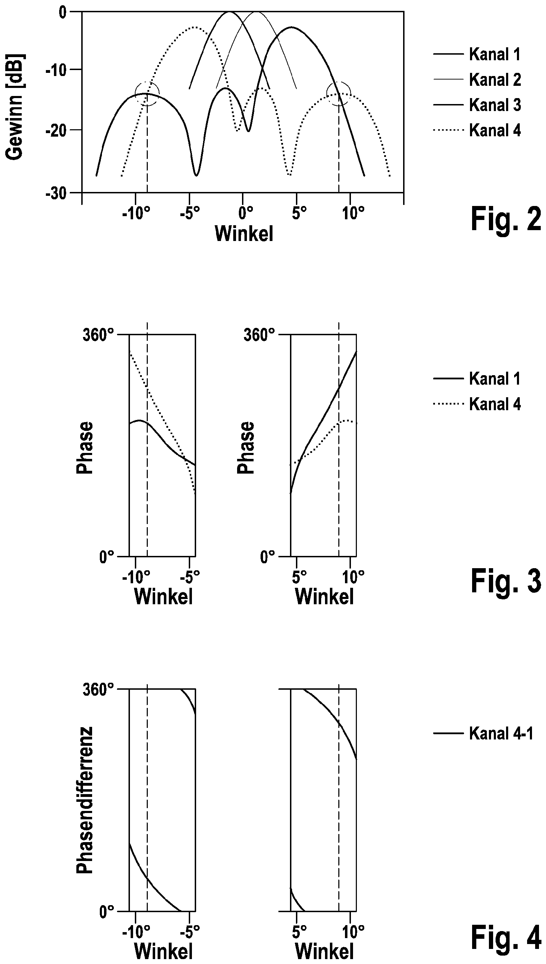

Fig. 2 zeigt schematisch ein Beispiel eines Antennendiagramms der vier Kanäle. Dargestellt ist der Antennengewinn (Amplitude) in dB über dem Azimutwinkel. Die jeweiligen Antennencharakteristiken der vier Kanäle sind, wie in Fig. 1, mit unterschiedlichen starken Linien (Kanäle 1 bis 3) und als punktierte Linie (Kanal 4) dargestellt. Benachbarte Hauptkeulen überlappen sich.

In Fig. 2 sind mit Kreisen zwei Winkelpositionen bei ca. -9° und +9° gekennzeichnet, an denen die Amplituden der Kanäle 1 und 4 einander gleich sind. Befindet sich beispielsweise ein Radarobjekt an einer solchen Position zwischen den Hauptempfindlichkeitsrichtungen 20 der Strahlen 1' und 4, an der in den Kanälen 1 und 4 Signale mit gleicher Amplitude empfangen werden, so würde an einer hierzu symmetrischen Position zwischen den Hauptempfindlichkeitsrichtungen 20 der Radarstrahlen 1 und 4' auf der gegenüberliegenden Seite das gleiche Amplitudenverhältnis der Signale in den Kanälen 1 und 4 erhalten werden.

Fig. 3 zeigt ausschnittsweise eine dazugehörige Darstellung der Phase über dem Azimutwinkel. Zur Vereinfachung der Darstellung sind nur die Kanäle 1 und 4 gezeigt. Der Versatz der Antennenelemente 12 gegenüber der Bildebene der Radarlinse 14 vergrößert eine Winkelabhängigkeit der Phase des Antennendiagramms. Aufgrund der antisymmetrischen Anordnung der Antennenelemente der Kanäle 1 und 4 bezüglich der optischen Achse, also die links und rechts der optischen Achse jeweils vertauschten Rollen der Kanäle 1 und 4, ist sowohl in der Amplitude als auch in der Phase die Richtcharakteristik des Kanals 1 spiegelbildlich zur Richtcharakteristik des Kanals 4 bezüglich dem Winkel Null. Die Phasendifferenz ist daher antisymmetrisch bezüglich dem Winkel Null.

Fig. 4 zeigt eine entsprechende Darstellung der Phasendifferenz der Kanäle 4 und 1. Die Kennlinie der Phasendifferenz ist winkelabhängig. An den Punkten gleicher Amplitude der Kanäle 1 und 4 unterscheiden sich ihre Phasen, und die resultierende Phasendifferenz ist beispielsweise bei -9° etwa 50°, während sie bei +9° etwa 310°, also-50°, beträgt. Somit sind an den Winkelpositionen mit gleicher Amplitude der Kanäle 1 und 4 die den jeweiligen Hauptkeulen desselben Kanals zugeordneten Winkelpositionen anhand der Phasendifferenz unterscheidbar. Ein Azimutwinkel eines Objektes kann dann eindeutig bestimmt werden.

Insbesondere durch die Anordnung der Antennenelemente 12 außerhalb der Fokusebene F und die bezüglich der optischen Achse asymmetrische Anordnung der mit demselben Kanal 28-1 oder 28-4 verbundenen Antennenelemente 12 sind somit in den Richtcharakteristiken der Antennenelemente Winkelpositionen, die unterschiedlichen Hauptkeulen 16 der mit demselben Empfangskanal verbundenen Antennenelemente 12 zugehören, anhand von zugehörigen Amplituden und Phasen und den Winkelpositionen zugehörigen Amplituden und Phasen eines oder mehrerer weiterer Empfangskanäle unterscheidbar. D.h., im Antennendiagramm des Radarsensors sind Winkelpositionen empfangener Radarsignale, welche Winkelpositionen unterschiedlicher Hauptkeulen 16 der mit demselben Empfangskanal verbundenen Antennenelemente 12 zugehören, anhand von Amplituden und Phasen der Radarsignale und von Amplituden und Phasen von Radarsignalen eines oder mehrerer weiterer Empfangskanäle unterscheidbar.

Die für jedes Objekt erhaltenen Ortungsdaten, also die Abstände, Relativgeschwindigkeiten und Azimutwinkel, werden vom Radarsensor über eine Schnittstelle 36 zur Verfügung gestellt. Der Radarsensor ist beispielsweise über die Schnittstelle 36 mit einem ACC-System 38 verbunden, welches dann auf der Grundlage der Ortungsdaten die Geschwindigkeit des mit dem Radarsensor ausgerüsteten Fahrzeugs regelt.

Die einzelnen Empfangskanäle 28 können bei parallelen Signalempfang aller Antennenelemente 12 für die Objekterfassung in unterschiedlichen Richtungen mehrfach verwendet werden. Dies wird möglich, da stets zwei nicht direkt benachbarte Antennenelemente 12 mit demselben Kanal 28 zur Auswertung verbunden sind. Dadurch kann Phasendifferenzinformation bezüglich einem oder mehreren dazwischen liegenden Antennenelementen 12 benutzt werden. Die Anzahl der Antennenelemente 12 ist größer als die Anzahl der Kanäle 28. Es ergibt sich ein vereinfachter Schaltungsaufbau, da die mit demselben Kanal 28 verbundenen Antennenelemente 12 unmittelbar miteinander verbunden sind.

Abweichend vom beschriebenen Beispiel können die Antennenelemente 12 aber auch jeweils mit einem separaten Mischer 24 verbunden sein, und es kann eine Zusammenschaltung der entsprechenden Zwischenfrequenzsignale auf die zugeordneten Kanäle 1 bzw. 4 erfolgen.

Phaseninformation zur Unterscheidung, von welcher Hauptkeule 16 des Kanals 1 ein Radarsignal stammt, kann auch durch Überlappung mit Radarkeulen 18 aus einem der Kanäle 2 oder 3 erlangt werden.

Etwaige Mehrdeutigkeiten zwischen einer linken oder einer rechten Position eines georteten Radarobjekts können beispielsweise auch durch ein Tracking von Radarobjekten aufgelöst werden. Das Modul 32 der Auswerteeinheit 30 kann beispielsweise dazu eingerichtet sein, Ortungsdaten für ein Objekt auch auf der Basis früherer Ortungsdaten eines Objektes zu bestimmen.

Weiter kann es Anwendungen geben, in denen es nicht erforderlich ist, bei außerhalb des Fahrschlauches georteten Radarobjekten zwischen Positionen weit links und weit rechts zu unterscheiden.

Durch die beschriebene Zusammenschaltung von Antennenelementen 12 mit unterschiedlichen, voneinander entfernten Hauptempfindlichkeitsrichtungen 20 kann mit nur vier Empfangskanälen 28 eine Winkelauflösung erreicht werden, die annähernd sechs einzelnen Beams entspricht. Anders, als es bei einer reinen Verbreiterung einzelner Beams der Fall wäre, wird die Winkelauflösung nicht verschlechtert, obwohl ein breiterer Sichtbereich abgetastet werden kann. Entsprechend der größeren Anzahl von zur Verfügung stehenden Hauptkeulen 16, 18 können beim erfindungsgemäßen Radarsensor die einzelnen Beams schärfer gebündelt sein, so dass die Hauptkeulen 16, 18 eine schlankere Form haben können als bei einem herkömmlichen Radarsensor. Dies lässt sich durch geeignete Dimensionierung und Anordnung der Antennenelemente (Patches) und der Radarlinse 14 erreichen. Die schärfere Bündelung der Beams hat den Vorteil, dass ein größeres Winkelauflösungsvermögen erreicht werden kann, während andererseits der insgesamt abgedeckte Winkelbereich größer als beim Stand der Technik sein kann.

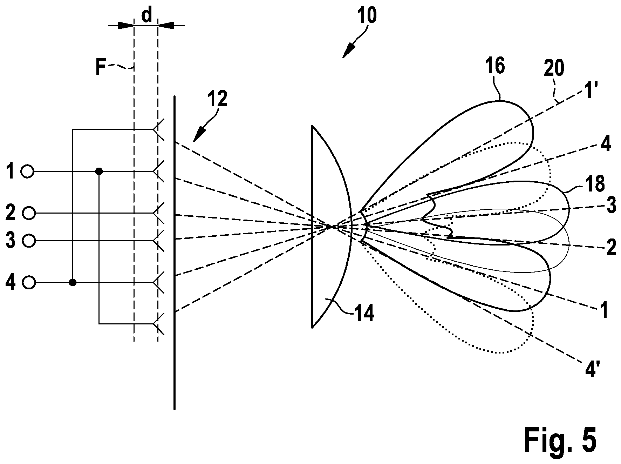

Fig. 5 zeigt eine Variante des Antennensystems des Radarsensors, bei dem die äußeren Antennenelemente 12 einen größeren Abstand voneinander haben als die inneren Antennenelemente 12. Dadurch ist der Winkelabstand zwischen den benachbarten äußeren Hauptempfindlichkeitsrichtungen 20 der Radarstrahlen 1', 4 und 3 größer als ein Winkelabstand zwischen den benachbarten inneren Hauptempfindlichkeitsrichtungen der Radarstrahlen 3 und 2. Ebenso ist auf der anderen Seite der Winkelabstand zwischen den benachbarten äußeren Hauptempfindlichkeitsrichtungen der Radarstrahlen 4', 1 und 2 größer als der Winkelabstand zwischen den inneren Hauptempfindlichkeitsrichtungen der Radarstrahlen 2 und 3. Dadurch kann eine hohe Winkelgenauigkeit im mittleren Winkelbereich um 0° erreicht werden, und gleichzeitig wird im äußeren Sichtbereich ein breites Ortungsfeld erreicht.

Es versteht sich, dass die in Fig. 1 und 2 dargestellten Anordnungen nur als Beispiele zu verstehen sind und dass die insgesamt verfügbare Anzahl von Antennenelementen 12 und Empfangskanälen 28 sowie die Konfiguration der Beams je nach Ausführungsform variieren kann.

Im beschriebenen Beispiel umfasst die Auswerteeinheit 30 vier Kanäle 28. Es können jedoch auch mehr als zwei Hauptkeulen 16 pro Empfangskanal 28 vorgesehen sein, in dem beispielsweise drei oder mehr Antennenelemente 12 mit einem Empfangskanal verbunden werden. Abweichend von der beschriebenen, symmetrischen Konfiguration kann auch eine nicht-symmetrische Konfiguration der einzelnen Hauptkeulen 16, 18 und/oder der Zuordnung der Hauptkeulen zu den Empfangskanälen erfolgen. So können beispielsweise auf einer Seite jeweils Antennenelemente zusammengefasst und mit einem gemeinsamen Kanal verbunden werden, während auf der anderen Seite der Reihe von Antennenelemente die Antennenelemente jeweils einzeln mit einem separaten Kanal verbunden sind.

Auch können die Abstände der einzelnen Antennenelemente 12 voneinander variiert werden. Die Abstände der Antennenelemente 12 sind nicht auf die beschriebenen, symmetrischen Konfigurationen beschränkt.

Während es sich in den beschriebenen Beispielen jeweils um ein monostatisches Antennensystem handelt, bei dem dieselben Antennenelemente 12 in derselben Zusammenschaltung auf die einzelnen Kanäle zum Senden und Empfangen verwendet werden, sind auch bistatische Ausführungsformen denkbar, bei denen die zum Empfang verwendeten Antennenelemente in entsprechender Weise mit Empfangskanälen verbunden sind. Das Antennensystem kann beispielsweise dem in Fig. 1 oder Fig. 2 gezeigten Antennensystem hinsichtlich der Verschaltung der Antennenelemente und der Konfiguration der Hauptkeulen 16, 18 und Hauptempfindlichkeitsrichtungen 20 entsprechen.

## Patentansprüche

1. Winkelauflösender Radarsensor für Kraftfahrzeuge, mit mehreren Antennenelementen (12), mehreren Empfangskanälen und einer vor den Antennenelementen (12) angeordnete Radarlinse (14), **dadurch gekennzeichnet, dass** wenigstens zwei mit demselben Empfangskanal (28/1) verbundene Antennenelemente (12) zusammen eine Richtcharakteristik mit wenigstens zwei Hauptkeulen (16) mit unterschiedlichen Hauptempfindlichkeitsrichtungen (20) aufweisen, wobei die mit diesem Empfangskanal (28/1) verbundenen Antennenelemente (12) bezüglich einer optischen Achse der Radarlinse (14) asymmetrisch angeordnet sind.

2. Radarsensor nach Anspruch 1, bei dem wenigstens ein weiteres, mit einem weiteren Empfangskanal (28) verbundenes Antennenelement (12) eine Richtcharakteristik mit wenigstens einer Hauptkeule (16; 18) mit einer Hauptempfindlichkeitsrichtung (20) aufweist, die zwischen zwei Hauptempfindlichkeitsrichtungen (20) der genannten wenigstens zwei Hauptkeulen (16) liegt.

3. Radarsensor nach einem der vorstehenden Ansprüche, bei dem die mit demselben Empfangskanal (28/1) verbundenen Antennenelemente (12) unmittelbar miteinander verbunden sind.

4. Radarsensor nach einem der vorstehenden Ansprüche, bei dem die Antennenelemente (12) außerhalb einer Fokusebene der Radarlinse (14) angeordnet sind.

5. Radarsensor nach einem der vorstehenden Ansprüche, bei dem die Antennenelemente (12) in einer Reihe angeordnet sind, wobei zwischen den wenigstens zwei mit demselben Empfangskanal (28/1) verbundenen Antennenelementen (12) wenigstens ein weiteres, mit einem weiteren Empfangskanal (28) verbundenes Antennenelement (12) angeordnet ist.

6. Radarsensor nach einem der vorstehenden Ansprüche, wobei die Antennenelemente (12) dazu eingerichtet sind, dass in den Richtcharakteristiken der Antennenelemente (12) Winkelpositionen, die unterschiedlichen Hauptkeulen (16) der mit demselben Empfangskanal (28/1) verbundenen Antennenelemente (12) zugehören, anhand von zugehörigen Amplituden und Phasen und den Winkelpositionen zugehörigen Amplituden und Phasen eines oder mehrerer weiterer Empfangskanäle (28/2, 28/3, 28/4) unterscheidbar sind.

7. Radarsensor nach einem der vorstehenden Ansprüche, mit einer Auswerteeinrichtung (30), die dazu eingerichtet ist, eine Winkelposition eines erfassten Radarobjektes zu bestimmen auf der Basis von Amplituden und Phasen empfangener Radarsignale der Antennenelemente (12), wobei die Auswerteeinrichtung (30) dazu eingerichtet ist, zwischen jeweiligen Hauptkeulen (16) zugeordneten Winkelpositionen eines durch die genannten wenigstens zwei Hauptkeulen (16) erfassten Radarobjektes zu unterscheiden auf der Basis von Amplituden und Phasen empfangener Radarsignale der mit demselben Empfangskanal (28/1) verbundenen Antennenelemente (12) und von Amplituden und Phasen empfangener Radarsignale eines oder mehrerer weiterer, mit einem oder mehreren weiteren Empfangskanäle (28/2, 28/3, 28/4) verbundenen Antennenelemente (12).

8. Radarsensor nach einem der vorstehenden Ansprüche, mit einer Auswerteeinheit (30), die dazu eingerichtet ist, eine Winkelposition eines erfassten Radarobjektes zu bestimmen auf der Basis von Amplituden und Phasen empfangener Radarsignale der Antennenelemente (12), wobei die Auswerteeinrichtung (30) dazu eingerichtet ist, beim Bestimmen der Winkelposition eine Phasendifferenz zwischen empfangenen Radarsignalen von Empfangskanälen (28/1; 28/4) zu berücksichtigen, die mit Antennenelementen (12) verbunden sind, welche Richtcharakteristiken mit einander überlappenden Hauptkeulen (16) aufweisen.

9. Radarsensor nach einem der vorstehenden Ansprüche, wobei wenigstens zwei Hauptempfindlichkeitsrichtungen (20) von mit einem ersten Empfangskanal (28/1) verbundenen Antennenelementen (12) mit wenigstens zwei Hauptempfindlichkeitsrichtungen (20) von mit einem weiteren Empfangskanal (28/4) verbundenen Antennenelementen (12) verschachtelt sind.

10. Radarsensor nach einem der vorstehenden Ansprüche, bei dem eine optische Achse des Radarsensors zwischen zwei Hauptempfindlichkeitsrichtungen (20) der Hauptkeulen (16) der wenigstens zwei mit demselben Empfangskanal (28/1; 28/4) verbundenen Antennenelemente (12) liegt.

11. Radarsensor nach einem der vorstehenden Ansprüche, bei dem die Antennenelemente (12) unterschiedliche jeweilige Hauptempfindlichkeitsrichtungen (20) haben, wobei ein Winkelabstand zwischen benachbarten äußeren Hauptempfindlichkeitsrichtungen (20) größer ist als ein Winkelabstand zwischen benachbarten inneren Hauptempfindlichkeitsrichtungen (20).

## Claims

1. Angle-resolving radar sensor for motor vehicles, comprising a plurality of antenna elements (12), a plurality of reception channels and a radar lens (14) arranged in front of the antenna elements (12), **characterized in that** at least two antenna elements (12) connected to the same reception channel (28/1) together have a directional characteristic with at least two major lobes (16) having different main sensitivity directions (20), wherein the antenna elements (12) connected to said reception channel (28/1) are arranged asymmetrically with respect to an optical axis of the radar lens (14).

2. Radar sensor according to Claim 1, wherein at least one further antenna element (12) connected to a further reception channel (28) has a directional characteristic with at least one major lobe (16; 18) having a main sensitivity direction (20) lying between two main sensitivity directions (20) of said at least two major lobes (16).

3. Radar sensor according to any of the preceding claims, wherein the antenna elements (12) connected to the same reception channel (28/1) are directly connected to one another.

4. Radar sensor according to any of the preceding claims, wherein the antenna elements (12) are arranged outside a focal plane of the radar lens (14).

5. Radar sensor according to any of the preceding claims, wherein the antenna elements (12) are arranged in a series, wherein at least one further antenna element (12) connected to a further reception channel (28) is arranged between the at least two antenna elements (12) connected to the same reception channel (28/1).

6. Radar sensor according to any of the preceding claims, wherein the antenna elements (12) are configured to the effect that in the directional characteristics of the antenna elements (12) angular positions which are associated with different major lobes (16) of the antenna elements (12) connected to the same reception channel (28/1) are differentiable on the basis of associated amplitudes and phases, and amplitudes and phases associated with the angular positions, of one or a plurality of further reception channels (28/2, 28/3, 28/4).

7. Radar sensor according to any of the preceding claims, comprising an evaluation device (30) configured to determine an angular position of a detected radar object on the basis of amplitudes and phases of received radar signals of the antenna elements (12), wherein the evaluation device (30) is configured to differentiate between angular positions - assigned to respective major lobes (16) - of a radar object detected by said at least two major lobes (16) on the basis of amplitudes and phases of received radar signals of the antenna elements (12) connected to the same reception channel (28/1) and on the basis of amplitudes and phases of received radar signals of one or a plurality of further antenna elements (12) connected to one or a plurality of further reception channels (28/2, 28/3, 28/4).

8. Radar sensor according to any of the preceding claims, comprising an evaluation device (30) configured to determine an angular position of a detected radar object on the basis of amplitudes and phases of received radar signals of the antenna elements (12), wherein the evaluation device (30) is configured, when determining the angular position, to take account of a phase difference between received radar signals of reception channel(s) (28/1; 28/4) which are connected to antenna elements (12) which have directional characteristics having mutually overlapping major lobes (16).

9. Radar sensor according to any of the preceding claims, wherein at least two main sensitivity directions (20) of antenna elements (12) connected to a first reception channel (28/1) are interleaved with at least two main sensitivity directions (20) of antenna elements (12) connected to a further reception channel (28/4).

10. Radar sensor according to any of the preceding claims, wherein an optical axis of the radar sensor lies between two main sensitivity directions (20) of the major lobes (16) of the at least two antenna elements (12) connected to the same reception channel (28/1; 28/4).

11. Radar sensor according to any of the preceding claims, wherein the antenna elements (12) have different respective main sensitivity directions (20), wherein an angular distance between adjacent outer main sensitivity directions (20) is greater than an angular distance between adjacent inner main sensitivity directions (20).

## Revendications

1. Capteur radar à résolution angulaire pour véhicules automobiles, comprenant plusieurs éléments d'antenne (12), plusieurs canaux de réception et une lentille de radar (14) disposée devant les éléments d'antenne (12), **caractérisé en ce qu'**au moins deux éléments d'antenne (12) reliés au même canal de réception (28/1) possèdent ensemble une caractéristique directionnelle ayant au moins deux lobes principaux (16) ayant des directions de sensibilité principale (20) différentes, les éléments d'antenne (12) reliés à ce canal de réception (28/1) étant disposés de manière asymétrique par rapport à un axe optique de la lentille de radar (14).

2. Capteur radar selon la revendication 1, avec lequel au moins un élément d'antenne (12) supplémentaire relié à un canal de réception (28) supplémentaire possède une caractéristique directionnelle ayant au moins un lobe principal (16 ; 18) ayant une direction de sensibilité principale (20) qui se trouve entre deux directions de sensibilité principale (20) desdits au moins deux lobes principaux (16).

3. Capteur radar selon l'une des revendications précédentes, avec lequel les éléments d'antenne (12) reliés au même canal de réception (28/1) sont reliés directement les uns aux autres.

4. Capteur radar selon l'une des revendications précédentes, avec lequel les éléments d'antenne (12) sont disposés en-dehors d'un plan focal de la lentille de radar (14).

5. Capteur radar selon l'une des revendications précédentes, avec lequel les éléments d'antenne (12) sont disposés en une ligne, au moins un élément d'antenne (12) supplémentaire relié à un canal de réception (28) supplémentaire étant disposé entre les au moins deux éléments d'antenne (12) reliés au même canal de réception (28/1).

6. Capteur radar selon l'une des revendications précédentes, les éléments d'antenne (12) étant conçus pour que dans les caractéristiques directionnelles des éléments d'antenne (12), les positions angulaires qui appartiennent à des lobes principaux (16) différents des éléments d'antenne (12) reliés au même canal de réception (28/1) puissent être différenciées au moyen des amplitudes et des phases associées ainsi que des amplitudes et phases associées aux positions angulaires d'un ou plusieurs canaux de réception (28/2, 28/3, 28/4) supplémentaires.

7. Capteur radar selon l'une des revendications précédentes, comprenant un dispositif d'interprétation (30) qui est conçu pour déterminer une position angulaire d'un objet radar détecté en se basant sur les amplitudes et les phases des signaux radar reçus des éléments d'antenne (12), le dispositif d'interprétation (30) étant conçu pour faire la différence entre les positions angulaires associées aux lobes principaux (16) respectifs d'un objet radar détecté par lesdits au moins deux lobes principaux (16) en se basant sur les amplitudes et les phases des signaux radar reçus des éléments d'antenne (12) reliés au même canal de réception (28/1) et sur les amplitudes et les phases des signaux radar reçus d'un ou plusieurs éléments d'antenne (12) supplémentaires reliés à un ou plusieurs canaux de réception (28/2, 28/3, 28/4) supplémentaires.

8. Capteur radar selon l'une des revendications précédentes, comprenant un dispositif d'interprétation (30) qui est conçu pour déterminer une position angulaire d'un objet radar détecté en se basant sur les amplitudes et les phases des signaux radar reçus des éléments d'antenne (12), le dispositif d'interprétation (30) étant conçu pour, lors de la détermination de la position angulaire, tenir compte d'une différence de phase entre les signaux radar reçus des canaux de réception (28/1 ; 28/4) qui sont reliés à des éléments d'antenne (12) qui possèdent des caractéristiques directionnelles avec des lobes principaux (16) qui se chevauchent mutuellement.

9. Capteur radar selon l'une des revendications précédentes, au moins deux directions de sensibilité principale (20) des éléments d'antenne (12) reliés au premier canal de réception (28/1) étant imbriquées avec au moins deux directions de sensibilité principale (20) des éléments d'antenne (12) reliés à un canal de réception (28/4) supplémentaire.

10. Capteur radar selon l'une des revendications précédentes, avec lequel un axe optique du capteur radar se trouve entre deux directions de sensibilité principale (20) des lobes principaux (16) des au moins deux éléments d'antenne (12) reliés au même canal de réception (28/1 ; 28/4).

11. Capteur radar selon l'une des revendications précédentes, avec lequel les éléments d'antenne (12) présentent des directions de sensibilité principale (20) respectives différentes, un écart angulaire entre les directions de sensibilité principale (20) extérieures voisines étant supérieur à un écart angulaire entre les directions de sensibilité principale (20) intérieures voisines.
